# EUROPEAN PATENT APPLICATION

(11) **EP 3 372 851 A1**
(43) Date of publication of application: **12.09.2018**
(21) Application number: 15902384.5
(22) Date of filing: 21.09.2015
(51) Int. Cl.: F16C 17/10

(54) **PLAIN BEARING**

(30) Priority: 25.08.2015 UA 201508383 U
(71) Applicant: Krivchikov, Viktor Ivanovich, Lugansk 91034 (UA); Akishin, Dmitry Ivanovich, Kiev 02068 (UA)
(72) Inventor: Krivchikov, Viktor Ivanovich, Lugansk 91034 (UA); Akishin, Dmitry Ivanovich, Kiev 02068 (UA)
(74) Representative: Lapienis, Juozas
(86) International application number: PCT/UA2015/000087
(87) International publication number: WO 2017/034503

(57) **Abstract**

Use: in bearing assemblies which are subject to high loads and have large dimensions. Essence: a plain bearing containing outer and inner housing rings made of a structural material, one of which has a two-sided conical surface which interacts with a conical surface of two rings made of an anti-friction material, wherein the gap between the contacting conical surfaces of the housing rings and anti-friction rings can be adjusted by tightening the anti-friction rings by means of a threaded connection, such as a bolt or threaded rod. Technical advantages: simplified design and maintenance.

## Description

### Technical field

The invention relates to engineering industry, in particular to such machine components as plain bearings, and may be used in highly loaded bearing assemblies of large geometrical dimensions.

### Prior art

A double-side tapering sliding-contact support is known comprising: a housing having tapering working surfaces divided by lubricant supply channels into sectors having profiled supporting surfaces, wherein each sector is configured as a skew helicoid; and tapering pins provided on a shaft [see SU1599594 (A1), F16C17/00; (IPC1-7): F16C17/00, pub.-1990-10-15, Bulletin 38].

Although the known tapering sliding-contact support is able to withstand large axial and radial loads in high-speed gearboxes of power compressors, turbines and pumps, however, it also has significant drawbacks. It is difficult to be produced and operated, in particular the sectors are configured as a complex skew helicoid, and in order to ensure its proper functioning when operated, a pressurised lubricant should be fed into a tapering cavity providing a gap between the housing and the rotating pins. Furthermore, this structure of the sliding-contact support doesn't allow adjusting the gap between the friction surfaces which leads to decrease in the efficiency and operational life of the known sliding-contact support.

According to its nature and the effect achieved, a plain bearing is the closest analogue and is considered to be the prototype, wherein the bearing comprises outer and inner housing rings, between which an anti-friction ring with double-side tapering sliding surface is arranged, the anti-friction ring interacting with a smooth surface of adjusting rings, one surface of which is provided with a thread thereby allowing the adjustment of the gap between the anti-friction ring and the adjusting rings[see UA57263, F16C17/00; (IPC1-7): F16C17/00, pub.-2003-06-16, Bulletin 6].

The main drawback of the known technical solution is that it is difficult to be used as a highly loaded plain bearing, in particular, having large geometrical dimensions. In this case, the problem is to provide a thread on the surfaces of the components having large geometrical dimensions, which is quite difficult to perform in terms of manufacturing. Furthermore, to adjust the gap between the tapering surfaces of the plain bearing, the bearing should be removed from the bearing assembly since one of the adjusting rings is arranged inside the bearing assembly, which causes certain difficulties and inconveniences during the maintenance of the known plain bearing, in particular, if it has considerable geometrical dimensions.

### Object of the invention

The object of the invention is to provide an efficient radial-axial plain bearing that can be produced at any engineering enterprise using easy-to-produce components and has high operating characteristics since it is ensured that an efficient amount of the gap between the friction surfaces of the bearing having large geometrical dimension is adjusted by altering the configuration of the anti-friction ring and its interaction with the housing rings of the bearing, as well as by using a different threaded element to adjust the gap between the friction surfaces.

### Summary of the invention

According to the invention, the above-mentioned object is achieved by a plain bearing having a double-side tapering surface that comprises outer and inner housing rings made of a constructional material, one of the rings having a double-side tapering surface which is configured to interact with a tapering surface of two rings made of an anti-friction material so as to adjust a gap between tapering contact surfaces of the housing rings and the anti-friction rings by tightening the anti-friction rings together by means of a threaded joint member, such as a screw or a pin.

In the prototype, a single anti-friction ring is used, the ring interacting with one of the housing rings of the bearing through its cylindrical surface, and with the tapering surfaces of the two adjusting rings through its two tapering surfaces.

According to the technical solution as suggested two non-stationary anti-friction rings are provided, each having one tapering surface interacting with the tapering surface of one of the housing rings of the bearing, and one cylindrical surface interacting with the other housing ring.

In order to adjust the gap between the friction surfaces in the prototype, a threaded joint is used between one of the housing rings of the bearing and the two adjusting rings, that is difficult to perform in terms of manufacturing.

According to the technical solution as suggested, the gap between the friction surfaces is adjusted by using a simple fastener, for example a screw or a pin.

Due to the modifications made, a new technical effect is provided consisting in widening the application range of such a plain bearing in highly loaded bearing assemblies, as well as reducing the labour intensity associated with individual and mass production when plain bearings having large geometrical dimensions are replaced; and achieving high operating characteristics by simplifying an operation of adjusting the optimal gap between the sliding surfaces.

According to the technical solution as suggested, the distinctive features don't characterize parts of the whole object which in turn may be individual objects having their own functions. Therefore, they are not classified separately from the other parts (features), and the set of the features defined in Claim that distinguish the technical solution as claimed from the known ones has not been found in patent documentation and scientific and technical literature so that the technical solution as suggested met the novelty criteria.

### Description of drawings

The technical solution as suggested is further explained with reference to accompanying drawings.
Fig. 1 shows an embodiment of the plain bearing as suggested.
Fig. 2 shows another embodiment of the plain bearing as suggested.

### Description of preferred embodiments

A plain bearing is provided, wherein its outer ring 1 cylindrical surface 2 interacts with the surface of an opening in a housing 3 of the bearing assembly, while the inner double-side tapering surface 4 of the ring interacts with tapering surfaces of two anti-friction rings 5 and 6.

The cylindrical surface 8 of smaller diameter of the inner housing ring 7 of the plain bearing interacts with the surface of a journal of a shaft 9, while its cylindrical surface 10 of greater diameter interacts with the cylindrical surface of the two anti-friction rings 5 and 6. To reduce the sliding friction between the associated tapering surfaces 4, a lubricant is fed through a channel 12 into a cavity 11.

The optimal gap between the associated tapering surfaces 4 of the outer ring 1 of the bearing and the anti-friction rings 5 and 6 is provided during the assembly of the bearing at the manufacturing works, and the gap is further adjusted by threaded connection of fasteners 13 and 14 as the friction surfaces wear out.

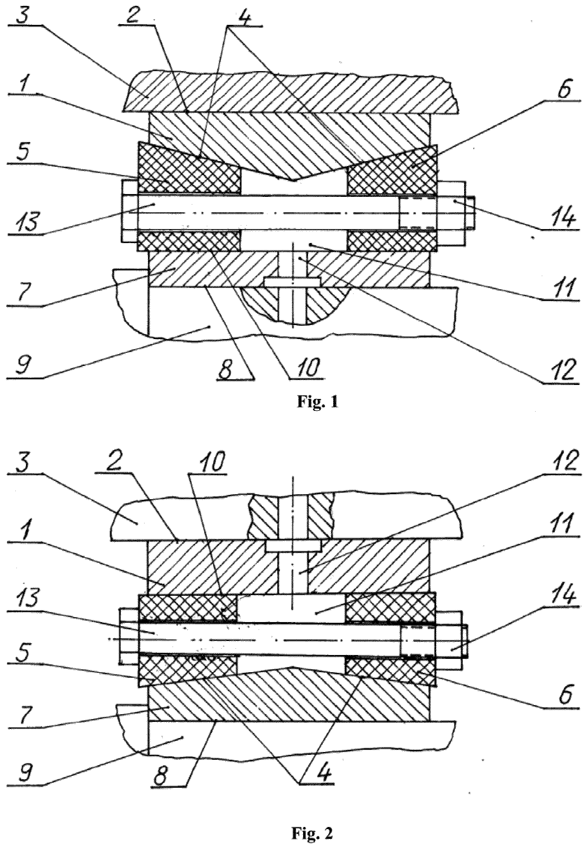

In another embodiment of the plain bearing as suggested (see Fig. 2), in contrast to the bearing shown in Fig. 1, the tapering surfaces of the housing ring that interact with the tapering surfaces 4 of the anti-friction rings 5 and 6 are provided on the inner housing ring 7 of the bearing.

The functional interaction of the components of the bearing according to the embodiment shown in Fig. 2 is analogous to the interaction of the components shown in Fig. 1.

### Technical advantages of the invention

The embodiments of the plain bearing shown in Fig. 1 and Fig. 2 allow using anti-friction materials of different properties in the rings 5 and 6. For example, in the embodiment of Fig. 1, when the dimensions of the plain bearing are the same as those of the bearing manufactured according to the embodiment of Fig. 2 and the rotational speed of the shaft 9 is identical, the specific pressure on the friction surface will be considerably lower than that of the bearing of Fig. 2 due to the considerably larger sliding friction surface, and thus the sliding speed will be higher.

This allows a wide variety of anti-friction materials to be chosen having various numeric values characterising the properties of the anti-friction materials.

## Claims

1. A plain bearing having a double-side tapering surface, **characterized in that** the bearing comprises outer and inner housing rings made of a constructional material, one of the rings having a double-side tapering surface configured to interact with a tapering surface of two rings made of an antifriction material so as to adjust a gap between tapering contact surfaces of the housing rings and the antifriction rings by tightening the antifriction rings together by means of a threaded joint member, such as a screw or a pin.
